# EUROPEAN PATENT APPLICATION

(11) **EP 2 648 297 A1**
(43) Date of publication of application: **09.10.2013**
(21) Application number: 12163438.0
(22) Date of filing: 05.04.2012
(51) Int. Cl.: H02G 3/32

(54) **Cable support device**

(71) Applicant: Airbus Operations GmbH, 21129 Hamburg (DE); AIRBUS OPERATIONS (S.A.S), 31060 Toulouse (FR)
(72) Inventor: Blanchet, Guillaume, 21147 Hamburg (DE); Marty, Olivier, 82600 Verdun sur Garonne (FR)
(74) Representative: Isarpatent

(57) **Abstract**

The present invention provides a device (1) for supporting cables (C), especially in an aircraft (50) or spacecraft, comprising: at least one mounting member (10) for attachment to a frame structure (40); a cable support member (20) for attachment to the mounting member (10); and a connection member (30) for connecting the support member (20) to the mounting member (10); wherein the connection member (30) is configured to resiliently latch with one of the support member (20) and the mounting member (10) to effect a releasable connection there-between.

## Description

The present invention relates to a device for supporting cables, particularly power cables and signal and/or data cables. In this regard, the cable support device of the invention is configured to support and guide cables or cable bundles for technical equipment or systems, for example in an aircraft or spacecraft, which typically requires the routing of extensive amounts of cabling.

In modern technical equipment and systems, and especially in relatively complex electro-mechanical equipment and systems, wires and cables for electrical power supply or for signal and/or data transfer are often required to be installed to provide electrical and/or data communication between the different components of the equipment and systems. To assist in this task, cable conduits are known for enclosing and for routing of electrical wiring. Adjacent equipment and systems, however, where the cables or cable bundles diverge from one another for connection to the equipment, the use of conduits is no longer suitable. At such locations it has been known to employ metal frames or stirrups to support separately spaced or diverging cables adjacent cable connection points. These metal frames or stirrups have typically been tailored for the specific location where they are deployed. As such, they are usually not demountable.

It is therefore an object of the present invention to provide an improved device for supporting cables, especially for use in an aircraft or spacecraft.

In accordance with the present invention, a cable support device as recited in claim 1, and an aircraft or spacecraft having such a support device is provided. Preferred features of the invention are recited in the dependent claims.

According to one aspect, therefore, the invention provides a device for supporting cables, especially in an aircraft or spacecraft, comprising:
at least one mounting member for attachment to a frame structure, especially of an aircraft or spacecraft;
a cable support member for attachment to the mounting member; and
a connection member for connecting the support member with the mounting member;
wherein the connection member is configured to resiliently latch with one of the support member and the mounting member to effect a releasable interconnection of the support member and the mounting member.

In a preferred embodiment, the connection member is configured for insertion into a respective opening of each of the support member and the mounting member to interconnect them. That one of the support member and mounting member with which the connection member latches is desirably configured for resilient latching engagement with the connection member received in the respective opening thereof. To this end, that one of the support member and the mounting member desirably includes spring means for biasing the connection member into the resilient latching engagement when the connection member is fully inserted into the respective opening. In this regard the spring means may be provided in the form of a leaf spring and preferably comprises a cantilevered finger- or tongue-like element, a free end region of which is adapted to bear against a contact surface of the connection member as the connection member is inserted into the respective opening thereby to bias the resilient latching engagement.

In a preferred embodiment, the connection member comprises: a shaft portion for insertion into the respective opening of each of the support member and the mounting member, and a head portion for abutting a facing surface of the respective support member or mounting member adjacent the opening when the shaft portion is in a fully inserted position. In this regard, the shaft portion of the connection member preferably comprises a lateral projection or lug at a distal end region thereof for latching engagement with a corresponding part, e.g. a recess, within the opening of the support member or the mounting member in the fully inserted position.

In a preferred embodiment, the device is configured to receive a tool for releasing the latching engagement with the connection member. In particular, the device may include a gap or space for insertion of a tool to release the latched connection member, the gap or space preferably being provided adjacent the spring means or spring element which biases the latching engagement. In this regard, the spring element may be formed integral with or cut out from the respective one of the support member or mounting member, such that the gap or space for insertion of a release tool may also be a cut-out from the respective support member or mounting member next to the spring element.

In a preferred embodiment, the at least one mounting member is elongate and is configured for attachment to the frame structure at one end region thereof and for attachment to the support member at an opposite end region thereof. The support member is also typically elongate and is desirably configured for attachment to the mounting member at an end region thereof such that the support member extends transverse to a longitudinal extent of the mounting member. In this regard, the mounting member is preferably configured to receive the connection member in a direction transverse to a longitudinal extent of the mounting member, and the support member is configured to receive the connection member in a longitudinal or axial direction thereof. Thus, in a particularly preferred embodiment, the opening in the support member may comprise or extend into a longitudinal or axially extending cavity at an end region thereof for receiving the connection member.

In an alternative embodiment, however, it will be appreciated that the mounting member could be configured to receive the connection member in its longitudinal direction, while the support member is configured to receive the connection member in a direction transverse to a longitudinal extent of the support member. Thus, the configuration of the support member and the mounting member and the structural interrelationship with the-connection member could be reversed.

In a particularly preferred embodiment, the cable support device comprises two mounting members for attachment to a frame structure, e.g. arranged spaced apart and substantially parallel to one another, and two connection members for connecting the support member to the two mounting members. In this embodiment, the support member is adapted for attachment to each of the mounting members such that the support member extends between the two mounting members. Accordingly, each connection member is preferably configured to resiliently latch with the support member, e.g. in a respective cavity at a respective end region thereof, to effect a releasable interconnection of the support member with the respective mounting member.

In a preferred embodiment, the cable support device further comprises means for securing a fastening strip or band around the connection member and through that one of the support member and the mounting member with which the connection member is configured to latch. In this regard, the securing means may include an aperture or lateral channel through the said one of the support member and the mounting member with which the connection member is configured to latch.

According to another aspect, the present invention provides an aircraft or spacecraft, having a cable supporting device according to the invention as described above with respect to any one of the preceding embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: is a perspective view of a device for supporting cables according to an embodiment of the invention;
- Fig. 2a: is a perspective view of a mounting member of the device of Fig. 1;
- Fig. 2b: is a side view of the mounting member of Fig. 2a;
- Fig. 2c: is a front view of the mounting member of Fig. 2a;
- Fig. 3: is a perspective view of a cable support member of the device of Fig. 1;
- Fig. 4a: is a perspective view of a connection member of the device of Fig. 1;
- Fig. 4b: is bottom view of the connection member of Fig. 4a;
- Fig. 4c: is an end view of the connection member of Fig. 4a;
- Fig. 4d: is a side view of the connection member of Fig. 4a;
- Fig. 4e: is an end view of the connection member of Fig. 4a;
- Fig. 5a: is a perspective view of a mounting member for a cable supporting device according to a modified embodiment of the invention;
- Fig. 5b: is a side view of the mounting member of Fig. 5a;
- Fig. 5c: is a front view of the mounting member of Fig. 5a;
- Fig. 6: is a perspective view of a cable supporting device according to an embodiment of the invention being assembled;
- Fig. 7: is a detailed cross-sectional view of the assembled parts of the cable supporting device of Fig. 6;
- Fig. 8: is a detailed perspective view of the assembled cable supporting device of Fig. 6 with securing strip;
- Fig. 9: is a detailed cross-sectional view of a disassembly of the parts of the cable support device of Fig. 6;
- Fig. 10: is a perspective view of a cable support device of the invention installed on a fuselage structure;
- Fig. 11: is a perspective view of a cable support device of the invention installed on a fuselage structure and supporting and guiding cables in use; and
- Fig. 12: shows an aircraft according to an embodiment of the present invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as it accorded to such terms and expressions with respect to their corresponding respective areas of inquiry and study, except where specific meanings have otherwise been set forth herein.

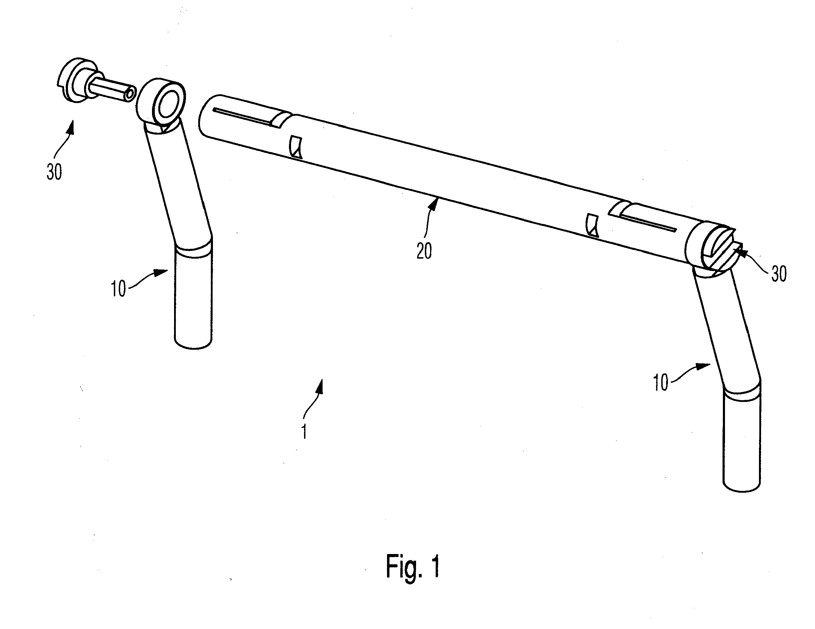

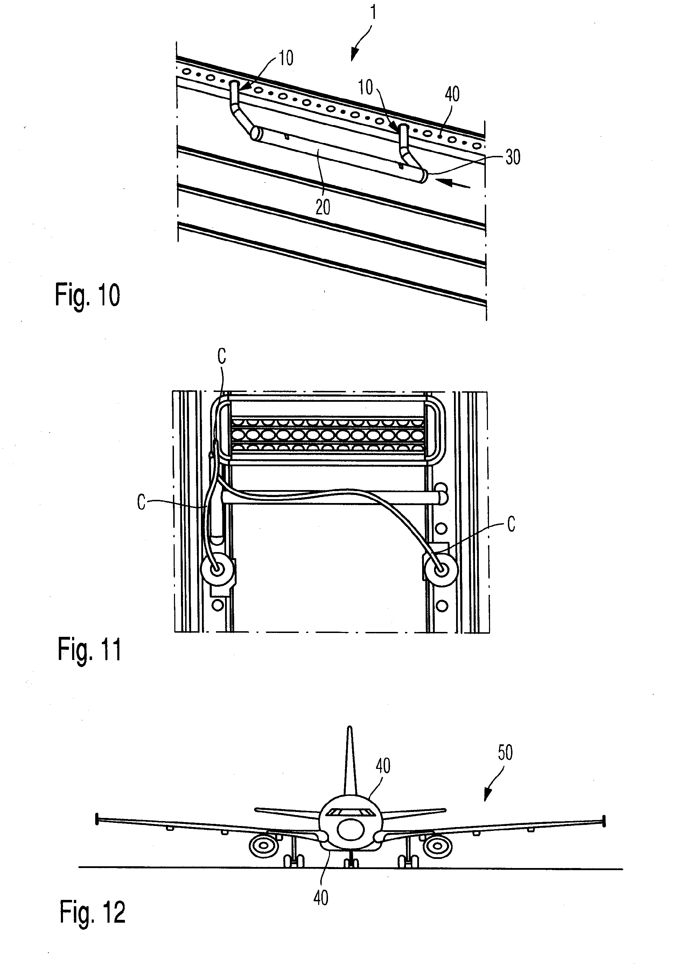

With reference firstly to Fig. 1 and Fig. 10 of the drawings, a device 1 for supporting cables C according to a first embodiment of the invention comprises a pair of mounting members 10 for attachment to a frame structure 40, especially a fuselage structure of an aircraft 50, such that the two mounting members 10 are spaced apart from one another and substantially parallel. Furthermore, the device 1 includes a cable support member 20 for attachment to an end of each of the mounting members 10 such that the support member 20 spans the distance separating the two mounting members 10. In this respect, the device 1 also includes two connection members 30 in the form of connection pins which operate to connect the central support member 20 to each of the mounting members 10. The specific structural details of the various parts of the cable support device 1, i.e. of the mounting members 10, the support member 20, and the connection members 30, as well as their operational interrelationships with one another will be described now in greater detail.

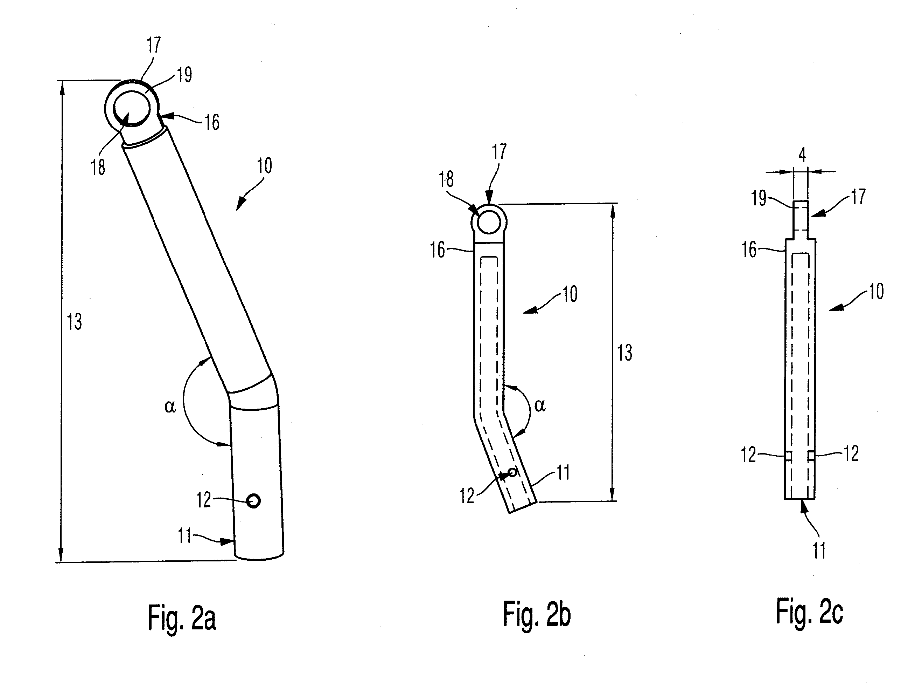

With reference therefore to Figs. 2a-2c, each of the mounting members 10 is seen to comprise an elongate tubular element which is may be formed from a robust polymer plastic material such as e.g. PE, HDPE, PVC or PU. In this particular example the mounting members or mounting arms 10 are not straight like the cable support member 20, but rather incorporate a bend or kink at an angle α of about 160°. One end region 11 of each of the mounting arms 10 is configured for attachment to the frame structure 40, e.g. the fuselage structure of the aircraft 50 within which the cables are to be supported and guided adjacent individual equipment installations. In this embodiment, the end region 11 of each mounting member 10 for attachment to the frame structure 40 may be hollow for receiving a mounting stub or shaft (not shown). A lateral through-hole 12 formed in this end region 11 of the mounting arm 10 may thus be arranged to register with a corresponding aperture or hole in the stub or shaft received within the end 11 of the mounting arm 10 for fixing same against separation. Alternatively, some other conventional fasting means may be provided for securely fastening the mounting end 11 of the mounting arms 10 to the frame structure 40.

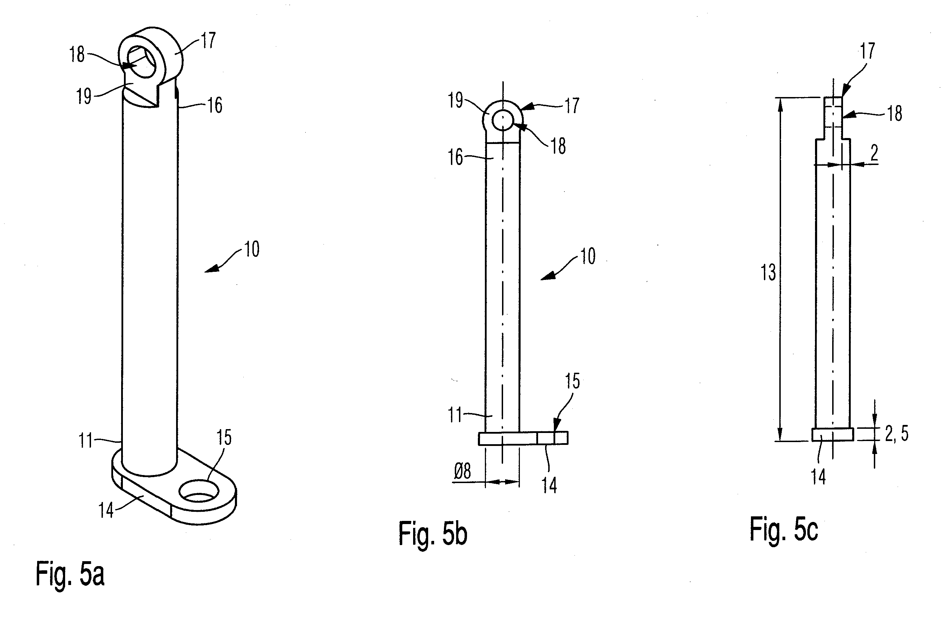

For example, Figs. 5a-5c of the drawings show a modified or alternative form for the mounting arms 10 in which they are not bent or kinked but simply comprise a straight tubular section having an overall length 13 of about 80 mm. In this embodiment, each mounting arm 10 includes a flange 14 at the end region 11 for attachment to the frame or fuselage structure 40 of the aircraft 50. The flange 14 may include one or more holes 15 for fastening elements such as rivets or screws or bolts to ensure a stable and secure fastening of the cable supporting device 1. Considering both embodiments of the mounting arm 10 in Figs. 2a-2c and Figs. 5a-5c, the opposite end region 16 of each mounting arm 10 comprises an eyelet 17 in the form of a ring-like element having a circular opening 18 there-through for attachment of the cable support member 20 via the connection member 30, as apparent from Fig. 1. Thus, the eyelet 17 with the circular opening or hole 18 there-through is adapted to receive and accommodate the respective connection member 30 therein.

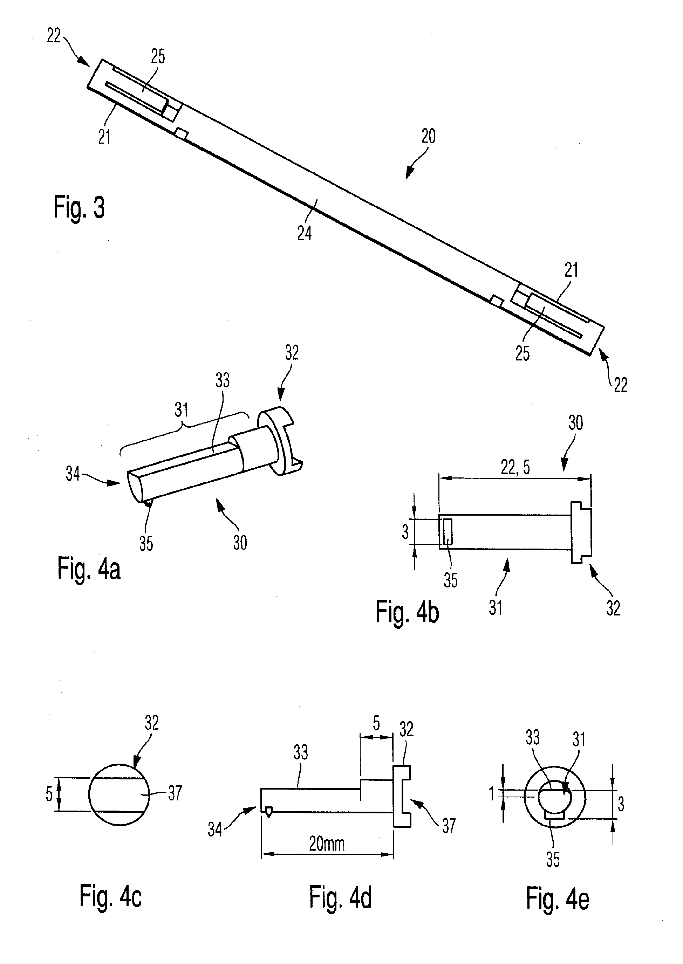

Fig. 3 of the drawings shows the cable support member 20 of the device 1 in isolation. Like the mounting members 10, the support member 20 is typically formed of a robust polymer plastic material, such as PE, HDPDE, PVC or PU, and has a hollow tubular structure (in this example with a circular cross-section), such that each end region 21 of the elongate support member or support tube 20 has an opening 22 into an axial or longitudinal cavity 23 for at least partially receiving a respective one of the connection members 30 upon assembly of the device 1, as shown in Fig. 1. Furthermore, portions of the side wall 24 of the tubular member 20 are cut out to form a tongue- or finger-like cantilevered spring element 25 at each of the opposite end regions 21 of the support member 20 adjacent the cavity 23 for receiving the respective connection member 30. The operation of the finger-like spring elements 25 will be described in detail below.

With reference to Figs. 4a-4e, the connection member 30 in this embodiment takes the form of a pin member comprising a shaft portion 31 and a head portion 32. As seen in Fig. 1, the shaft portion 31 is configured to be inserted through the opening 18 of the eyelet 17 formed at the distal end 16 of each mounting arm 10 passing there-through into the opening 22 and cavity 23 formed in the opposite end regions 21 of the cable support member 20. The head portion 32 of connection pin 30, on the other hand, is configured to abut against a facing surface 19 of the eyelet 17 surrounding the opening 18 once the shaft portion 31 of the connection pin member 30 is fully inserted into the cavity 23 of the support member 20. The shaft portion 31 of the connection pin 30 includes a flattened contact surface 33 along a length the shaft portion 31 on one side thereof. A distal end 34 of the shaft portion includes a lug or prong 35 which projects radially outwards in a direction opposite the flattened contact surface 33. The operation of this connection member 30 in the assembly of the cable support device 1 of the invention is described below.

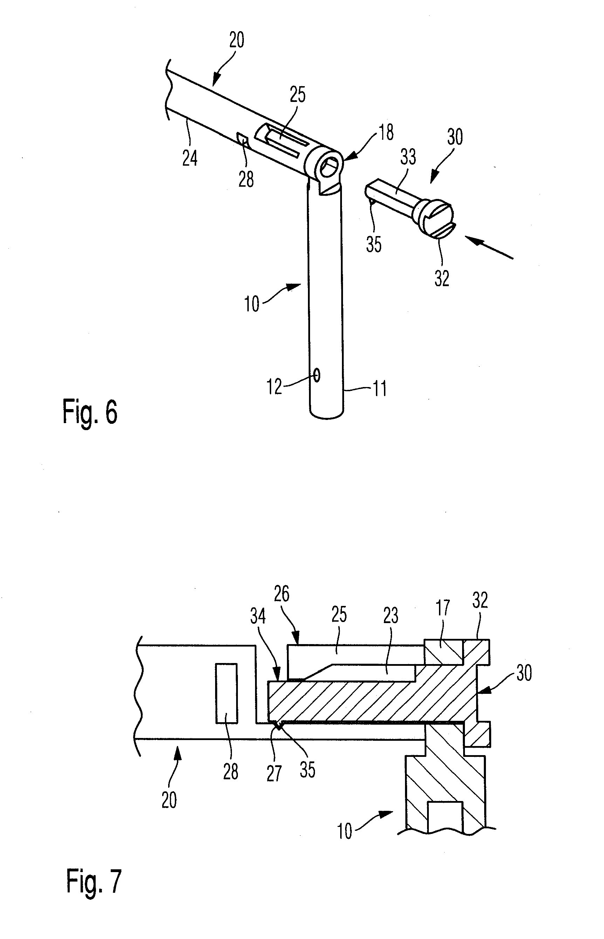

Turning now to Figs. 6 and 7 of the drawings, the assembly of the cable support device 1 of the invention becomes clearer. Once the mounting arms 10 are securely attached to the frame structure 40 of the aircraft 50 at an appropriate spacing for the particular support member 20 to be attached between those two mounting arms 10, the support member 20 is positioned in alignment with the openings or holes 18 formed through each of the eyelets 17 in the mounting members 10 and, in each case, a connection member or pin 30 is inserted through the eyelet 17 and into the cavity 23 at the respective end region 21 of the support member 20. In doing so, the connection pin 30 is oriented such that the flattened contact surface 33 is aligned with and directly opposite to the finger- or tongue-like spring element 25 in the side wall 24 of the tubular support member 20.

As is apparent from Fig. 7, the free end 26 of finger-like spring element 25 includes a lobe which engages and applies a force to the flat contact surface 33 of the shaft portion 31 of each connection pin 30 as it is inserted into the respective cavity 23. Due to the thin and elongate form of the finger-like element 25, it operates as a leaf spring and is free to deflect radially outwardly (with respect to the radius of the tubular member 20) as the shaft portion 31 of the connection pin 30 is inserted. At the opposite side of the cavity 23 in the end region 21 of the support tube 20, a recess or slot 27 is formed for accommodating the lug or prong 35 projecting laterally from the shaft portion 31 of the connection pin 30 opposite to the flattened contact surface 33. In particular, when the shaft portion 31 of the connection pin 30 is fully inserted into the cavity 23, the laterally projecting lug or prong 35 reaches the recess or slot 27 formed in the side wall 24 of the tubular member 20 and is free to be received within that recess or slot 27. In this way, the connection member 30 latches with the tubular support member 20 under the resilient bias of the finger-like spring element 25. More specifically, the connection pin 30 cooperates with the spring element 25 of the support member 20 to provide a resilient latching engagement and to effect an interconnection of the support member 20 with the mounting member 10. Thus, the cable support device 1 of the invention provides a snap-fit latching mechanism at each of end 21 of the tubular support member 20 to provide a releasable interconnection of the mounting members 10 and support member 20 in the configuration illustrated in Fig. 1.

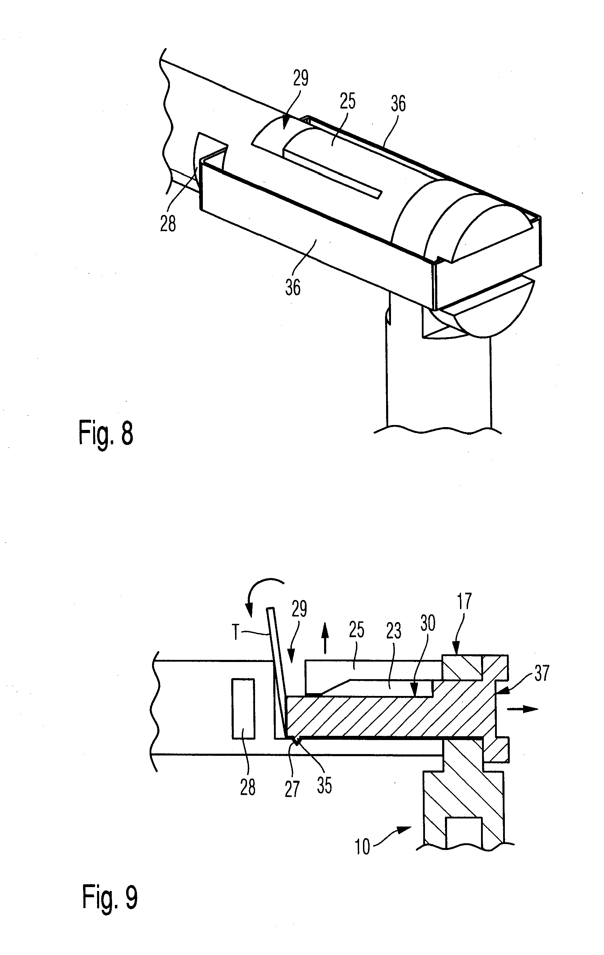

To provide an additional level of security in the attachment of the support member 20 to the mounting members 10, the cable support device 1 of this embodiment includes additional securing means for a fastening band 36 to be provided around the connection member 30 and through the support member 20. Referring to Fig. 7 and Fig. 8, a lateral aperture or channel 28 is provided through the support member 20 transverse to its longitudinal axis at spaced slightly from the cavity 23. The lateral aperture or channel 28 may have a substantially rectangular configuration for accommodating a cable tie 36 as shown in Fig. 8. In this regard, the head portion 32 of the connection member 30 is preferably includes a correspondingly configured rectangular channel 37 which is oriented to extend parallel to the lateral aperture or channel 28 through the support member 20 when the connection pin 30 is in the fully inserted position, as shown in Fig. 7. Thus, an operator may readily thread a cable tie 36 through the lateral channel 28 of the tubular support member 20 and around the head 32 of the connection pin 30 to additionally secure the elements of the cable support device 1 against inadvertent and unwanted separation in use.

With reference to Fig. 9, the releasable disassembly of the components of the cable supporting device 1 of the invention is illustrated. By inserting a thin tool T into the cavity 23 via a gap or space 29 cut-out of the side wall 24 of the support member 20 adjacent the free end 26 of the finger-like spring element 25, the distal end 34 of the connection pin 30 can be levered upwards to lift the lug or prong 35 out of the latching engagement with the recess 27 against a bias of the spring element 25. As the latching engagement is released via the tool T, the pin member 30 can be simultaneously removed by applying an outward force to the head portion 32 of the connection pin 30 to thereby withdraw the shaft portion 31 of the pin 30 from the cavity 23 and release the connection of the support member 20 with the respective mounting member 10. Naturally, if a cable tie 36 is in place as shown in Fig. 8, that cable tie 36 will need to be cut or otherwise removed prior to the operation illustrated in Fig. 9.

Fig. 10 of the drawings shows the cable supporting device 1 of the invention installed along part of a fuselage structure 40 of an aircraft 50. In Fig. 11, the device 1 is shown in use supporting and guiding cables C in the aircraft fuselage.

In this regard, cable ties 36 can be used to fix cables C to the cable support member 20 and/or to the mounting members 10 in order to ensure that unwanted force is not inadvertently applied to cable connection points P on sensitive equipment or installations, as is known in the art. Finally, Fig. 12 of the drawings simply shows the aircraft 50 having a fuselage structure 40 along the length of which the cable supporting device 1 of the present invention is employed.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: cable support device
- 10: mounting member or arm
- 11: end region
- 12: through-hole
- 13: length
- 14: flange
- 15: fastener hole
- 16: opposite end region
- 17: eyelet
- 18: opening
- 19: facing surface
- 20: support member
- 21: end region
- 22: opening
- 23: cavity
- 24: side wall
- 25: spring element
- 26: free end
- 27: recess or slot
- 28: lateral aperture or channel
- 29: gap or space
- 30: connection member
- 31: shaft portion
- 32: head portion
- 33: contact surface
- 34: distal end
- 35: lug or prong
- 36: cable tie
- 37: channel
- 40: frame structure or fuselage
- 50: aircraft
- C: cable or cable bundle
- T: tool
- α: angle

## Claims

1. Device (1) for supporting cables (C), especially in an aircraft or spacecraft, comprising:
at least one mounting member (10) for attachment to a frame structure;
a cable support member (20) for attachment to the mounting member (10); and
a connection member (30) for connecting the support member (20) to the mounting member (10);
wherein the connection member (30) is configured to resiliently latch with one of the support member (20) and the mounting member (10) to effect a releasable connection there-between.

2. Cable supporting device according to claim 1, wherein the connection member is configured for insertion in a respective opening of each of the support member and the mounting member, and wherein one of the support member and the mounting member is configured for resilient latching engagement with the connection member in the respective opening thereof.

3. Cable supporting device according to claim 2, wherein said one of the support member and the mounting member comprises a spring element for biasing the connection member into the resilient latching engagement when the connection member is fully inserted into the respective opening.

4. Cable supporting device according to claim 3, wherein the spring element comprises a cantilevered or tongue-like element, a free end region of which is configured to bear against a contact surface of the connection member as the connection member is inserted into the respective opening.

5. Cable supporting device according to any one of claims 2 to 4, wherein the connection member comprises a shaft portion for insertion into the respective opening of each of the support member and the mounting member and a head portion for abutting a facing surface adjacent the opening when the shaft portion is in a fully inserted position.

6. Cable supporting device according to claim 5, wherein the shaft portion of the connection member comprises a lateral projection or lug at a distal end region thereof for latching engagement with a recess in the fully inserted position.

7. Cable supporting device according to any one of the claims 2 to 6, wherein the mounting member is configured to receive the connection member in a direction transverse to a longitudinal extent of the mounting member, and the support member is configured to receive the connection member in a longitudinal direction the support member.

8. Cable supporting device according to any one of the claims 2 to 6, wherein the mounting member is configured to receive the connection member in a longitudinal direction of the mounting member, and the support member is configured to receive the connection member in a direction transverse to a longitudinal extent of the support member.

9. Cable supporting device according to claim 7, wherein the support member comprises a longitudinally or axially extending cavity at an end region thereof for receiving the connection member.

10. Cable supporting device according to any one of the preceding claims, wherein the mounting member is elongate and configured for attachment to the frame structure at one end region thereof and for attachment to the support member at an opposite end region thereof.

11. Cable supporting device according to claim 10, wherein the support member is elongate and configured for attachment to the mounting member at an end region thereof such that the support member extends transverse to a longitudinal extent of the mounting member.

12. Cable supporting device according to any one of the preceding claims, comprising two mounting members for attachment to a frame structure arranged spaced apart and extending substantially parallel to one another, and two connection members for connecting the support member to the two mounting members, wherein the support member is configured for attachment to each of the mounting members such that the support member extends between the two mounting members, wherein each connection member is configured to resiliently latch with either the support member or one of the mounting members to effect a releasable connection there-between.

13. Cable supporting device according to any one of the preceding claims, further comprising means securing a fastening band around the connection member and through said one of the support member and the mounting member with which the connection member is configured to latch.

14. Cable supporting device according to claim 13, wherein the securing means includes an aperture through said one of the support member and the mounting member with which the connection member is configured to latch.

15. Aircraft or spacecraft, comprising at least one cable mounting device according to any one of claims 1 to 14.
